# EUROPEAN PATENT APPLICATION

(11) **EP 3 223 484 A1**
(43) Date of publication of application: **27.09.2017**
(21) Application number: 15871533.4
(22) Date of filing: 22.04.2015
(51) Int. Cl.: H04L 29/06

(54) **TERMINAL AND TERMINAL CALL SOFT SWITCHING METHOD**

(30) Priority: 23.12.2014 CN 201410815725
(71) Applicant: ZTE Corporation, Shenzhen, Guangdong 518057 (CN)
(72) Inventor: LI, Jianing, Shenzhen Guangdong 518057 (CN); WANG, Xiaoyan, Shenzhen Guangdong 518057 (CN); ZHANG, Jianlong, Shenzhen Guangdong 518057 (CN)
(74) Representative: Awapatent AB
(86) International application number: PCT/CN2015/077197
(87) International publication number: WO 2016/101457

(57) **Abstract**

Provided are a terminal and a terminal call soft switching method. The method includes the following steps: when a terminal sends an INVITE message to a first server to which the terminal is registered at current but receives no response, the terminal retransmits the INVITE message to the first server according to a retransmission interval; when a number of retransmission times for the INVITE message is greater than a preset value and no response has been received from the first server, the terminal sends a register message to a second server; and after the terminal is registered to the second server, the terminal sends the INVITE message to the second server.

## Description

### Technical Field

This document relates to the field of Session Initiation Protocol (SIP) terminal switching master-standby servers in an NGN (Next Generation Network) Network, in particular to a terminal and a terminal call soft switching method.

### Background

Session Initiation Protocol (SIP) terminal master-standby server switching refers to that, when a SIP server to which a SIP terminal is registered at current breaks down, the SIP terminal may be registered to the other server such that the service of the terminal is not influenced. Generally, SIP terminal master-standby server switching requires that the terminal is capable of being managed by two or more SIP servers. These SIP servers adopt a master-standby working mechanism. Under normal circumstances, the SIP terminal is controlled by a master server only. Once the master server breaks down, the SIP terminal is registered to a standby server according to preconfigured address information, and the standby server replaces the master server to perform control and thereby the work of a system is prevented from being interrupted. This working mode is master-standby switching, which is also called disaster recovery or dual homing.

Some problems as follows exist in the existing art of SIP terminal master-standby server switching.

The most common switching mode is that the SIP terminal detects a server state by using registration refresh. However, since the valid period of SIP registration is generally long (0.5 hour to 1 hour), if the current server breaks down, the state of the server cannot be sensed in time and voice calls cannot be made within a refresh period.

Another common mode is that a server state is detected by adopting a heartbeat mechanism. This mode is more sensitive but has disadvantages that the SIP terminal and the server both are required to support the same heartbeat message, and the burden of the core network device is increased since heartbeats are sent periodically and need to occupy certain network traffic. If the server to which the terminal is registered at current breaks down, it needs a certain period of time for heartbeat to initiate a detection and master-standby switching, and during the period of certain time a user cannot make a call by dialing after off-hook.

There is also another mode that the SIP server notifies the SIP terminal to perform switching. This mode is the most sensitive and in this mode the SIP terminal can immediately perform switching. However, this mechanism requires that the SIP server and the SIP terminal both support a specific notification message (which has not been standardized so far), and the generality is comparatively weak, and messages cannot be sent when the server breaks down under many situations (for example, power is off and network is disconnected), and consequently this mode is not very reliable.

The last mode is that whether to switch the server is judged according to a response of an INVITE message. The INVITE message is a SIP session initiation message and is used for initiating a long connection session. For a SIP fixed phone terminal, the INVITE message is used for initiating a call. The INVITE message and a response message thereof are both defined by protocol specifications, and intercommunity is very good, and additional messages such as heartbeats are not needed and the network requirement is comparatively low. By using the INVITE message, whether to perform master-standby switching is judged according to a call state (such as timeout or specific error code). However, after the SIP terminal switches the master-standby servers under the situation of INVITE retransmission timeout, the INVITE message is abandoned and the user is required to hook up and then hook off again to dial.

The above-mentioned several implementation modes respectively have advantages and disadvantages in master-standby switching but all cannot solve one problem that the user has to hook up and wait to proper time to hook off again to dial in the situation where if the terminal is registered to the master server at current, and the master server cannot normally communicate with the SIP terminal within a certain period of time due to certain reasons (for example, power is off and network is disconnected), and the user hooks off to dial at this period, the SIP terminal sends an INVITE message and the server makes no response. Under this situation, the above-mentioned modes all may have at least one call loss. As a result, the user experience is not good.

### Summary

Embodiments of the present invention provide a terminal and a terminal call soft switching method, which are used for solving the problem that all master-standby switching modes have at least one call loss when a user hooks off to dial under a situation where a communication link between a SIP terminal and a server breaks down in the existing art.

To solve the above-mentioned technical problem, an embodiment of the present invention provides a terminal call soft switching method, including the following steps: when a terminal sends an INVITE message to a first server to which the terminal is registered at current but receives no response, the terminal retransmitting the INVITE message to the first server according to a retransmission interval; when a number of retransmission times for the INVITE message is greater than a preset value and no response has been received from the first server, the terminal sending a register message to a second server; and after the terminal is registered to the second server, the terminal sending the INVITE message to the second server.

In an exemplary embodiment, time of the retransmission interval sequentially increases with the number of retransmission times.

In an exemplary embodiment, the terminal is a SIP terminal, and the first server is a SIP master server and the second server is a SIP standby server.

In an exemplary embodiment, the terminal is a SIP terminal, and the first server is a SIP standby server and the second server is a SIP master server.

An embodiment of the present invention further provides a terminal, including an INVITE message retransmission module, a register message sending module and an INVITE message sending module. The INVITE message retransmission module is configured to, when the terminal sends an INVITE message to a first server to which the terminal is registered at current but receives no response, retransmit the INVITE message to the first server according to a retransmission interval. The register message sending module is configured to, when a number of retransmission times for the INVITE message is greater than a preset value and no response has been received from the first server, send a register message to a second server. The INVITE message sending module is configured to, after the terminal is registered to the second server, send the INVITE message to the second server.

In an exemplary embodiment, time of the retransmission interval sequentially increases with the number of retransmission times.

In an exemplary embodiment, the terminal is a SIP terminal, and the first server is a SIP master server and the second server is a SIP standby server.

In an exemplary embodiment, the terminal is a SIP terminal, and the first server is a SIP standby server and the second server is a SIP master server.

An embodiment of the present invention further provides a computer-readable storage medium storing program instructions, and when executed, the program instructions can implement the above-mentioned method.

In the terminal call soft switching method provided by the embodiment of the present invention, devices such as the terminal and the server do not need to support heartbeat and notification message, and whether to perform master-standby switching can be judged only according to the number of retransmission times for the INVITE message. Especially, the INVITE message of the user at a current time is also directly switched when the server is switched, and the call is normally initiated and established. Therefore, the user experience is good, and the process is simple and the reliability is high.

### Brief Description of Drawings

FIG. 1 illustrates a flowchart of a terminal call soft switching method provided by an embodiment of the present invention.
FIG. 2 illustrates a flowchart of switching a SIP terminal from a SIP master server to a SIP standby server in embodiment one of the present invention.
FIG.3 illustrates a flowchart of switching a SIP terminal from a SIP standby server to a SIP master server in alternative embodiment two of the present invention.
FIG. 4 illustrates a schematic diagram of a terminal provided by an embodiment of the present invention.

### Detailed Description

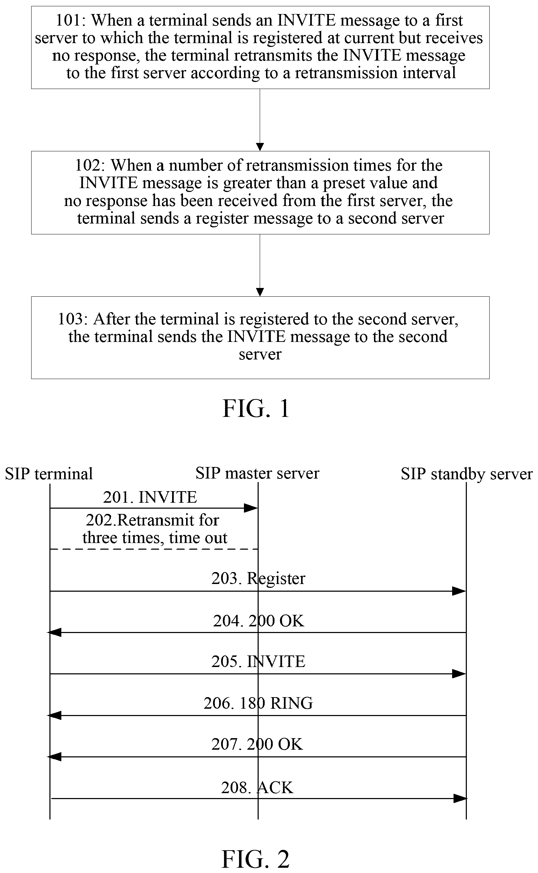

As illustrated in FIG. 1, the alternative embodiment of the present invention provides a terminal call soft calling method, including the following steps. In step 101, when a terminal sends an INVITE message to a first server to which the terminal is registered at current but receives no response, the terminal retransmits the INVITE message to the first server according to a retransmission interval. In step 102, when a number of retransmission times for the INVITE message is greater than a preset value and no response has been received from the first server, the terminal sends a register message to a second server. In step 103, after the terminal is registered to the second server, the terminal sends the INVITE message to the second server.

FIG. 2 illustrates a flowchart of switching a SIP terminal from a SIP master server to a SIP standby server in alternative embodiment one of the present invention. Please refer to FIG. 2, and in this embodiment, the terminal is a SIP terminal, and the first server is a SIP master server and the second server is a SIP standby server.

In step 201, a SIP terminal is registered to a SIP master server. After a user hooks off to dial, the SIP terminal sends an INVITE call message to the SIP master server.

In step 202, the SIP master server is powered off or a network of the SIP master server is disconnected at this moment and makes no response. The SIP terminal retransmits the INVITE message under the action of an internal retransmission timer. Generally, time of the retransmission interval sequentially increases. It is considered that a communication link is disconnected when a number of retransmission times reaches a preset maximum value and no response is received. This maximum value is generally set according to current network use experience and may be modified through a medium or configuration command, and here it is supposed that the link is considered to be disconnected if no response is received after three retransmission times.

In step 203, after the number of retransmission times for the INVITE message exceeds a maximum number of times, it is considered that a link between the SIP terminal and the SIP master server has already been disconnected, and the SIP terminal is switched to a SIP standby server and is registered to the SIP standby server.

In step 204, if the SIP terminal normally receives a 200 OK response, the SIP terminal is successfully registered.

In step 205, after successfully registered, the SIP terminal sends the cached INVITE message to the SIP standby server.

In step 206, the SIP standby server sends a 180 RING message to the SIP terminal.

In step 207, the SIP standby server sends a 200 OK response to the SIP terminal.

In step 208, the SIP terminal sends ACK to the SIP standby server.

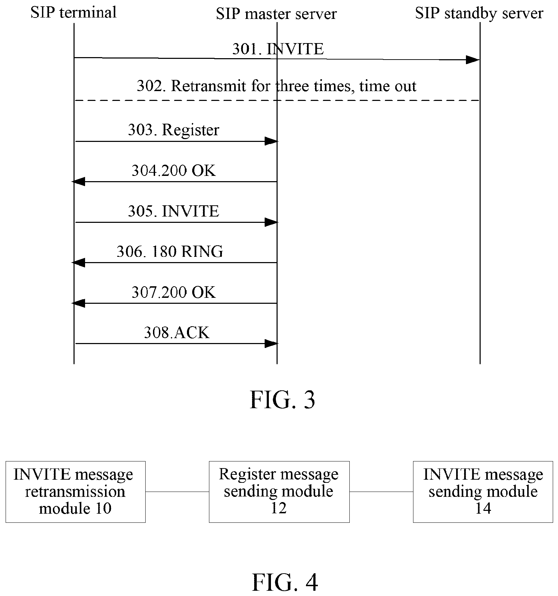

FIG.3 illustrates a flowchart of switching a SIP terminal from a SIP standby server to a SIP master server in alternative embodiment two of the present invention. Please refer to FIG. 3, and in this embodiment, the terminal is a SIP terminal, and the first server is a SIP standby server and the second server is a SIP master server.

In step 301, a SIP terminal is registered to a SIP standby server. After a user hooks off to dial, the SIP terminal sends an INVITE call message to the SIP standby server.

In step 302, the SIP standby server is powered off or a network of the SIP standby server is disconnected at this moment and makes no response. The SIP terminal retransmits the INVITE message under the action of an internal retransmission timer. Generally, time of the retransmission interval sequentially increases. It is considered that a communication link is disconnected when a number of retransmission times reaches a preset maximum value and no response is received. Here, it is supposed that the link is considered to be disconnected if no response is received after three retransmission times.

In step 303, after the number of retransmission times for the INVITE message exceeds a maximum number of times, it is considered that a link between the SIP terminal and the SIP master server has already been disconnected, and the SIP terminal is switched to a SIP master server and is registered to the SIP master server.

In step 304, if the SIP terminal normally receives a 200 OK response, the SIP terminal is successfully registered.

In step 305, after successfully registered, the SIP terminal sends the cached INVITE message to the SIP master server.

In step 306, the SIP master server sends a 180 RING message to the SIP terminal.

In step 307, the SIP master server sends a 200 OK response to the SIP terminal.

In step 308, the SIP terminal sends ACK to the SIP master server.

As illustrated in FIG. 4, the alternative embodiment of the present invention further provides a terminal, including an INVITE message retransmission module 10, a register message sending module 12 and an INVITE message sending module 14. The INVITE message retransmission module 10 is configured to, when the terminal sends an INVITE message to a first server to which the terminal is registered at current but receives no response, retransmit the INVITE message to the first server according to a retransmission interval. The register message sending module 12 is configured to, when a number of retransmission times for the INVITE message is greater than a preset value and no response has been received from the first server, send a register message to a second server. The INVITE message sending module 14 is configured to, after the terminal is registered to the second server, send the INVITE message to the second server. A detailed operation process of the terminal is the same as the above-mentioned method and thus is not repetitively described herein.

To sum up, in the present invention, after the INVITE message is retransmitted for a certain number of times, master-standby server switching is directly performed; firstly the INVITE message is cached, and then REGISTER is initiated to the standby server, and the INVITE message which is cached previously is extracted after registration succeeds and is continuously sent to the standby server, and a call is initiated and established. Thereby, the user does not need to concern about the process of master-standby server switching, and the result of the current call is still successful and no obvious influence is caused. Besides, the terminal call soft switching method provided by embodiments of the present invention may also be combined with switching modes in the existing art to use.

One ordinary skilled in the art can understand that all or partial steps in the above-mentioned embodiments may be implemented by using a computer program process, and the computer program may be stored in a computer-readable storage medium, and the computer program is executed on a corresponding hardware platform (e.g., a system, equipment, an apparatus or a device, etc.). When being executed, the computer program includes one or combinations of the steps of the method embodiments.

In an exemplary embodiment, all or partial steps in the above-mentioned embodiments may also be implemented by using integrated circuits, and these steps may be respectively manufactured into integrated circuit modules, or more modules or steps thereof may be manufactured into a single integrated circuit module to implement.

Each device/function module/function unit in the above-mentioned embodiments may be implemented by adopting a general-purpose computing device, and they may be integrated on a single computing device and may also be distributed on a network consisting of a plurality of computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

By adopting the solution provided by the embodiments of the present invention, the user experience is good, and the process is simple and the reliability is high.

## Claims

1. A terminal call soft switching method, comprising the following steps:
when a terminal sends an INVITE message to a first server to which the terminal is registered at current but receives no response, the terminal retransmitting the INVITE message to the first server according to a retransmission interval;
when a number of retransmission times for the INVITE message is greater than a preset value and no response has been received from the first server, the terminal sending a register message to a second server; and
after the terminal is registered to the second server, the terminal sending the INVITE message to the second server.

2. The terminal call soft switching method according to claim 1, wherein time of the retransmission interval sequentially increases with the number of retransmission times.

3. The terminal call soft switching method according to claim 1, wherein the terminal is a Session Initiation Protocol, SIP, terminal, and the first server is a SIP master server and the second server is a SIP standby server.

4. The terminal call soft switching method according to claim 1, wherein the terminal is a SIP terminal, and the first server is a SIP standby server and the second server is a SIP master server.

5. A terminal, comprising an INVITE message retransmission module, a register message sending module and an INVITE message sending module, wherein:
the INVITE message retransmission module is configured to, when the terminal sends an INVITE message to a first server to which the terminal is registered at current but receives no response, retransmit the INVITE message to the first server according to a retransmission interval;
the register message sending module is configured to, when a number of retransmission times for the INVITE message is greater than a preset value and no response has been received from the first server, send a register message to a second server; and
the INVITE message sending module is configured to, after the terminal is registered to the second server, send the INVITE message to the second server.

6. The terminal according to claim 5, wherein time of the retransmission interval sequentially increases with the number of retransmission times.

7. The terminal according to claim 5, wherein the terminal is a Session Initiation Protocol, SIP, terminal, and the first server is a SIP master server and the second server is a SIP standby server.

8. The terminal according to claim 5, wherein the terminal is a SIP terminal, and the first server is a SIP standby server and the second server is a SIP master server.

9. A computer-readable storage medium, storing program instructions, which, when executed, can implement the method according to any one of claims 1-4.
